# EUROPÄISCHE PATENTSCHRIFT

(11) **EP 0 287 904 B1**
(45) Veröffentlichungstag und Bekanntmachung des Hinweises auf die Patenterteilung: **17.03.1993**
(21) Anmeldenummer: 88105581.8
(22) Anmeldetag: 08.04.1988
(51) Int. Cl.: B30B 15/02, B23B 27/14

(54) **Presswerkzeug und aus einem damit geformten Grünling gesinterter Schneideinsatz**
Press tool and sintered cutting insert formed from a green compact
Outil de pressage et insert de coupe fritté formé à partir d'un compact vert

(30) Priorität: 21.04.1987 DE 3713334
(43) Veröffentlichungstag der Anmeldung: 26.10.1988
(73) Patentinhaber: Krupp Widia GmbH, 45145 Essen (DE)
(72) Erfinder: von Haas, Rainer, Dipl.-Ing., D-2054 Geesthacht (DE); Morbitzer, Helmut, D-4300 Essen 14 (DE); Agustin Payá, José, D-4330 Mülheim (DE)
(74) Vertreter: Vomberg, Friedhelm, Dipl.-Phys.

(56) Entgegenhaltungen:
- EP-A- 0 081 775
- EP-A- 0 125 568
- EP-A- 0 152 037
- GB-A- 792 351
- GB-A- 2 031 788
- US-A- 4 504 284

## Beschreibung

Schneideinsätze oder Wendeschneidplatten werden aus gepreßten Grünlingen durch Sintern hergestellt, wobei die Grünlinge beim Sintern im sogenannten Schrumpfverhältnis schrumpfen, das insbesondere vom zu sinternden Material abhängt.

Die zum Fressen der Grünlinge vorgesehenen Preßwerkzeuge weisen einen Oberstempel, einen Unterstempel und eine mit beiden, zusammenwirkende Matrize auf. Im allgemeinen hat der Unterstempel und die zu dieser Führung vorgesehene Ausnehmung der Matrize einen der Auflagefläche des Schneideinsatzes im umgekehrten Schrumpfverhältnis größeren, entsprechenden Querschnitt. Bei einem in der Matrize geführten Oberstempel entspricht sein Querschnitt und die zu seiner Führung vorgesehene Ausnehmung der Matrize - abgesehen von dem Schrumpfverhältnis - der Fläche, die durch die oberen Eckpunkte des Schneideinsatzes und die sie verbindenden gedachten geraden Linien gegeben ist.

So beschreibt die GB-A-2 031 788 ein Werkzeug zum Pressen von Pulvermaterial zu einem kompakten Gegenstand, wie z.B. einem Grünling zur Weiterverarbeitung zu einer Wendeschneidplatte mit gegenüber der Spanfläche unter Bildung eines spitzen Winkels geneigten Freiflächen. Das Preßwerkzeug besitzt eine Matrize, einen Unterstempel und einen zweiteiligen Oberstempel mit einem äußeren Teil zur Ausformung einer umlaufenden Fase und einem inneren Teil zur Ausformung von Spanbrechernuten und der hierdurch umrandeten inneren Spanfläche.

Bei Preßwerkzeugen mit in der Matrize geführtem Ober- und Unterstempel zum Pressen von Grünlingen, aus denen Schneideinsätze mit gegenüber der Auflagefläche geneigten Freiflächen gesintert werden sollen, entsprechen die Übergangsflächen von der oberen Führungsausnehmung zur unteren Führungsausnehmung der Matrize - abgesehen vom Schrumpfverhältnis - den Freiflächen der Schneideinsätze und sind unter demselben Freiwinkel geneigt, wobei der Übergang von den senkrechten Flächen der oberen Führungsausnehmung zu den entsprechenden Übergangsflächen im Falle ebener Freiflächen jeweils durch eine geradlinige Knickkante gebildet wird.

Die EP 0 125 568 betrifft einen Schneideinsatz für die Bearbeitung von Aluminium, Molybdän und deren Legierungen, Kunststoffen und ähnlichen Materialien, mit mindestens einer Schneidecke, von der aus sich jeweils zwei Schneidkanten mit scharfkantig daran anschließenden Spanleitstufenflanken erstrecken. Die Schneidkanten fallen von den Schneidecken zur Schneidkantenmitte hin zumindest im Bereich der Schneidecken mit einem Neigungswinkel zwischen 5 und 20° ab. Die mit einem größer als 15° gewählten Spanwinkel abfallende Flanke jeder Spanleitstufe nimmt im abfallenden Schneidkantenabschnitt von der Schneidecke zur Schneidkantenmitte hin in ihrer Breite zu und erstreckt sich bis zu Winkelhalbierenden jeder Schneidecke. Die abfallenden Flanken jeder Spanleitstufe grenzen mit einem Winkel, der größer als 130° ist, an einen gegenüber den Schneidkanten abgesenkten Mittelteil des Schneideinsatzes.

Grünlinge für sogenannte negative Schneideinsätze ohne Freiwinkel, d.h. mit zur Auflagefläche senkrechten Freiflächen mit oder ohne geneigte Schneidkanten, und für sogenannte positive Schneideinsätze mit einem Freiwinkel > 0 mit von Ecke zu Ecke durchgehend gedachten geradlinigen, d.h. nicht geneigten Schneidkanten können - abgesehen vom Schrumpfverhältnis - ohne weiteres in die endgültige bzw. fertige Form der Schneideinsätze gepreßt werden. Mit bekannten Preßwerkzeugen gepreßte Grünlinge für positive Schneideinsätze mit einem Freiwinkel von > 0 und unter einem Neigungswinkel verlaufenden Schneidkanten, die in der Draufsicht zwischen zwei benachbarten Ecken einen nichtlinearen Verlauf zeigen, weisen jedoch - bedingt durch die senkrechten Umfangs- oder Führungsflächen des Oberstempels - an ihrem oberen Ende einen Abschnitt von überschläglich 1 mm Höhe mit senkrechten Umfangs- oder Freiflächen ohne Freiwinkel auf, wobei sich erst an deren unteren Kante die mit Übermaß versehenen Freiflächen anschließen. Zum Fertigstellen müssen die gesinterten Schneideinsätze an ihrer Freifläche noch um im wesentlichen das Maß (1 mm x sin α) abgeschliffen werden.

Es ist zwar bereits versucht worden, den Oberstempel zwischen den höchsten und niedrigsten Punkten der Begrenzungslinien der Druckfläche des Oberstempels mit einer unter dem Freiwinkel geneigten Anschrägung zu versehen. Bei dieser Anordnung ergibt sich aber im Zusammenhang mit den unter demselben Freiwinkel abgeschrägten Übergangsflächen der Matrize am Ende des Preßhubes durch eingeklemmtes Sintermaterial eine derartige örtliche Druckerhöhung, daß die Gefahr der Zerstörung insbesondere des Oberstempels besteht.

Der Erfindung liegt die Aufgabe zugrunde, bei der Herstellung eines Schneideinsatzes mit ebenen Freiflächen mit positivem Freiwinkel und geneigten Schneidkanten den zusätzlichen Arbeitsgang des Schleifens der Freiflächen einzusparen, ohne die Gefahr der Zerstörung eines Werkzeugteils in Kauf nehmen zu müssen.

Diese Aufgabe wird erfindungsgemäß dadurch gelöst, daß das Preßwerkzeug gemäß den im kennzeichnenden Teil des Anspruchs 1 beschriebenen Merkmalen gestaltet wird. Dadurch, daß die Druckfläche des Oberstempels - entsprechend dem umgekehrten Schrumpfverhältnis des Sintermaterials - der fertigen Fläche der Oberseite des Schneideinsatzes entspricht, ergibt sich, daß die Begrenzungslinie der Druckfläche des Oberstempels dem Schneidkantenverlauf des Schneideinsatzes entspricht. Da - beginnend mit diesen Begrenzungslinien - oberhalb der Begrenzungslinien ein Freiraum in dem Preßwerkzeug vorhanden ist, kann es nicht zu einem örtlichen Zusammenpressen des Sintermaterials kommen, da im Bereich des Freiraums keine entsprechende Gegenfläche vorhanden ist. Der Oberstempel kann somit mit der Begrenzunglinie seiner Druckfläche im wesentlichen bis an die schrägen Innenflächen der Matrize heranreichen. Bei einem mit diesem Preßwerkzeug hergestellten Grünling bzw. dem daraus gesinterten Schneideinsatz beginnen die schrägen Freiflächen somit unmittelbar an den Schneidkanten. Der Schneideinsatz ist also in seinem oberen Bereich nach dem Sintern bereits fertig ausgebildet und ein Schleifen der Freiflächen kann entfallen. Der so fertig ausgebildete Schneideinsatz kann anschließend auch noch mit einem Überzug versehen werden.

Vorteilhafte Weiterbildungen des Gegenstandes der Erfindung sind in den Unteransprüchen beschrieben. So ist nach Anspruch 2 eine besonders einfache Führung des Oberstempels in der Matrize aufgezeigt. Es ist aber auch möglich, den Oberstempel an mit der Matrize verbundenen anderen Führungselementen, wie Führungssäulen, zu führen.

Der Freiraum zwischen dem Oberstempel und der Matrize ist gemäß den Ansprüchen 3 bis 8 in den Oberstempel gelegt, was durch einfaches Konturschleifen erreichbar ist. Im einfachsten Fall sind dazu die an die Begrenzungslinie der Druckfläche angrenzenden Seitenflächen des Oberstempels parallel zu seiner Bewegungsrichtung gehalten.

Zur Vergrößerung des Freiraums können die Seitenflächen entweder nach Anspruch 7 nach innen zurückgenommen sein oder nach Anspruch 8 eine Umfangsnut oder eine Hinterschneidung aufweisen.

Um den Freiraum vor jedem neuen Füll- und Preßvorgang wieder sauber zu haben, ist nach Anspruch 10 eine Absaugung vorgesehen.

Ein Schneideinsatz nach Anspruch 11, der aus einem Grünling, der durch das erfindungsgemäße Preßwerkzeug gepreßt worden ist, gesintert ist, weist an den Freiflächen keinerlei fertigungsbedingtes Übermaß mehr auf. So gehen insbesondere die Freiflächen exakt bis zu den Schneidkanten hoch. Der Schneideinsatz ist somit fertig gesintert und braucht insbesondere an seinen Freiflächen nicht mehr z.B. durch Schleifen nachbearbeitet zu werden. Lediglich an der Auflagefläche kann ein Nachschleifen - wie allgemein üblich - vorteilhaft sein.

Ausführungsbeispiele des Gegenstandes der Erfindung sind in der Zeichnung dargestellt und werden im folgenden näher erläutert. Es zeigen:
- Fig. 1: einen Schneideinsatz mit schrägen Freiflächen und geneigten Schneidkanten in einer teilweise geschnittenen Seitenansicht,
- Fig. 2: den Schneideinsatz in der Draufsicht,
- Fig. 3: ein Preßwerkzeug im Querschnitt,
- Fig. 4: den Oberstempel des Preßwerkzeugs in einer perspektivischen Darstellung von unten,
- Fig. 5: einen am 0berstempel angeordneten Freiraum in einem auszugsweise vergrößerten Querschnitt,
- Fig. 6: ein anderes Ausführungsbeispiel eines solchen Freiraums,
- Fig. 7: ein weiteres Ausführungsbeispiel eines solchen Freiraums und
- Fig. 8: ein in der Matrize des Preßwerkzeugs angeordneter Freiraum in einem auszugsweisen Querschnitt in vergrößerter Darstellung.

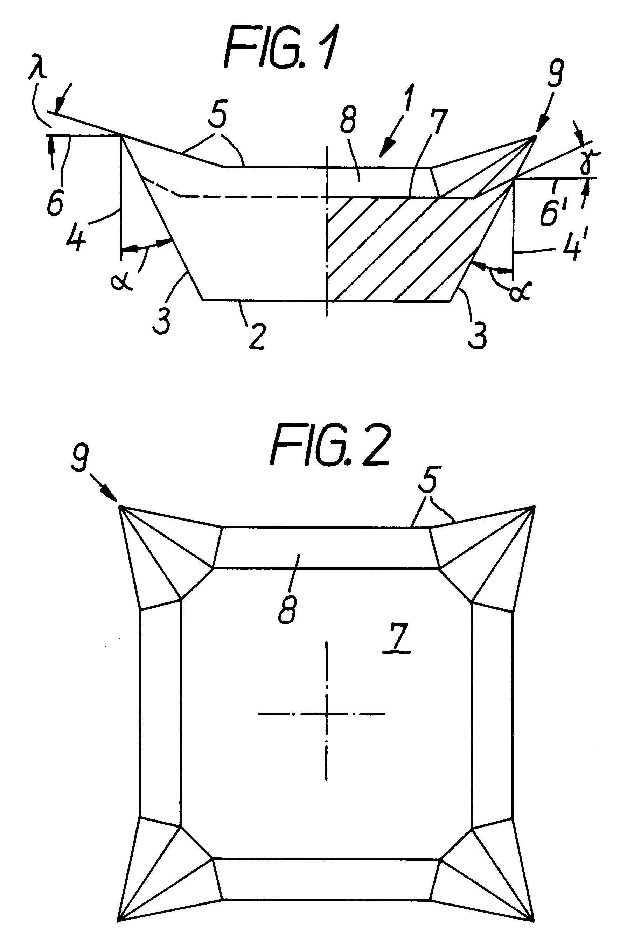

Die Wendeschneidplatte oder der Schneideinsatz 1 nach dem Ausführungsbeispiel gemäß den Figuren 1 und 2 weist eine geschliffene Auflagefläche 2 quadratischer Ausbildung auf. Die ebenen Freiflächen 3 sind unter einem Freiwinkel α gegen die senkrecht zur Auflagefläche 2 gedachte jeweilige Schneidenebene 4, 4ʹ geneigt. Die Schneidkanten 5 sind zumindest über einen Teil ihrer Länge unter einem Neigungswinkel λ geneigt. Außerdem weist der Schneideinsatz 1 einen positiven Spanwinkel γ gegen eine parallel zur Auflagefläche 2 verlaufende Bezugsebene 6 bzw. 6ʹ auf Aus Gründen einer vereinfachten Darstellung sind die Schneidkanten 5 nur geradlinig und die Winkelverhältnisse der Deutlichkeit halber stark verzerrt bzw. übertrieben dargestellt. In Abwandlung des dargestellten Ausführungsbeispiels können die Schneidkanten 5 aber auch (nicht dargestellte) gerundete Ecken und/oder Übergangsbögen aufweisen. Weiterhin kann der Schneideinsatz 1 auch, wie an sich bekannt, eine andere, z.B. rhombische Grundform haben und/oder eine (nicht dargestellte) mittlere Ausnehmung aufweisen. Der zum Sintern des Schneideinsatzes 1 vorgesehene (nicht gesondert dargestellt) sog. Grünling ist im umgekehrten Schrumpfverhältnis des zu sinternden Materials größer als der fertige Schneidansatz, ansonsten aber in seiner Formgebung absolut identisch mit dem Schneideinsatz.

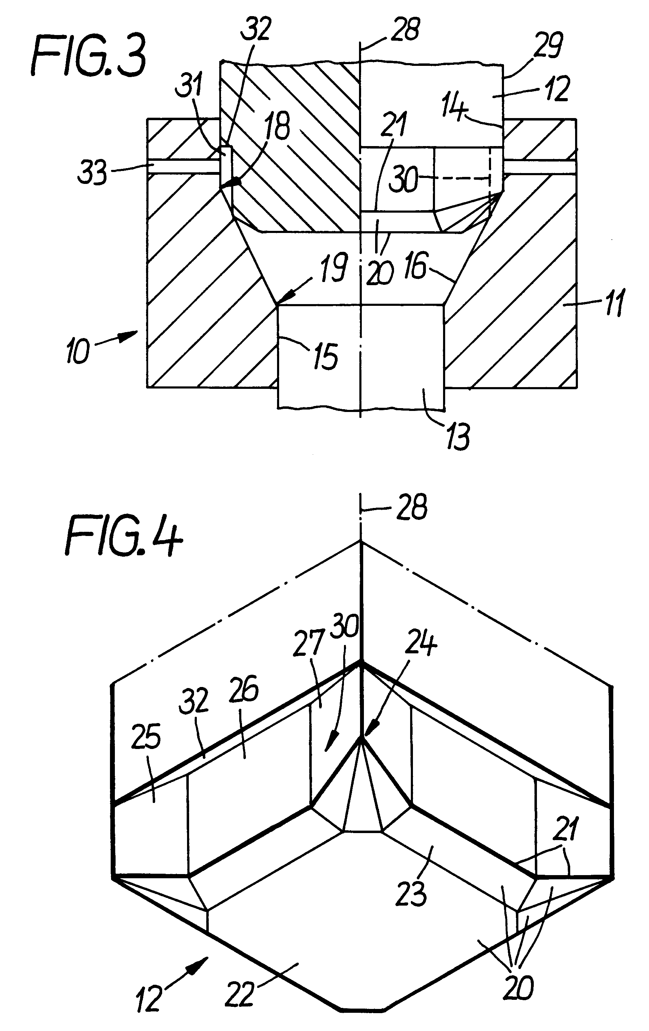

Das zum Formen und Pressen eines Grünlings vorgesehene Preßwerkzeug 10 gemäß Fig. 3 weist im wesentlichen eine Matrize 11, einen Oberstempel 12 und einen Unterstempel 13 auf. Dabei weist der Oberstempel 12 und die zu seiner Führung vorgesehene Ausnehmung 14 in der Matrize 11 einen rechteckigen Querschnitt auf, dessen Größe sich durch die Eckmaße des Schneideinsatzes dividiert durch das Schrumpfverhältnis des zu sinternden Materials bestimmt. Die untere Führungsausnehmung 15 und der Unterstempel 13 weisen ebenfalls einen rechteckigen Querschnitt auf, der sich aus der unbearbeiteten Auflagefläche 2 des Schneideinsatzes 1 dividiert durch das Schrumpfverhältnis bestimmt.

Zwischen der oberen und der unteren Führungsausnehmung 14 bzw. 15 sind unter dem Freiwinkel α des Schneideinsatzes 1 schräg verlaufende ebene Übergangsflächen 16. Die senkrechten Flächen der Führungsausnehmungen 14, 15 und die angrenzenden Übergangsflächen 16 weisen jeweils eine gemeinsame Kante 18 bzw. 19 auf.

Der in Fig. 4 perspektivisch mit Blick von unten dargestellte Oberstempel 12 weist an seiner Unterseite eine Druck- oder Preßfläche 20 auf, die -abgesehen vom Schrumpfverhältnis - exakt der oberen Oberfläche des fertigen Schneideinsatzes 1 entspricht, wobei die Begrenzungslinien 21 der Druckfläche 20 exakt den Schneidkanten 5 entsprechen und der - mit Blick von unten - erste, ebene Flächenteil 22 der Druckfläche 20 der Grundfläche 7 der Oberseite des Schneideinsatzes 1 entspricht. Die daran angrenzenden schrägen Flächenstreifen 23 entsprechen den positiven Spanflächenstreifen 8 und die am weitesten zurückliegenden Punkte 24 der Druckfläche 20 des Überstempels den Eckpunkten 9 des Schneideinsatzes 1. Über eine Höhe h, gerechnet ab dem ersten Flächenteil 22 der Druckfläche 20, sind die sich an die Begrenzungslinie 21 der Druckfläche 20 anschließenden Seitenflächenteile 25, 26, 27 parallel zur Bewegungsrichtung des Oberstempels 12 bzw. zu seiner zentrischen Längsachse 28 ausgebildet, was durch einfaches Konturschleifen erreicht werden kann. Dabei bilden diese Flächenteile 25...27 gegenüber den darüberliegenden Führungsflächen 29 des Oberstempels 12 jeweils eine Ausnehmung 30, die im Zusammenhang mit der Gegenfläche 14/16 in der Matrize 11 einen Frei-oder Hohlraum 31 bildet. Gegenüber dem hinteren Teil des Oberstempels sind die Ausnehmungen 30 durch Übergangsflächen 32 begrenzt.

In bezug auf die unterste Stellung des Oberstempels 12 ist in Höhe der Ausnehmungen 30 in der Matrize 11 jeweils eine an eine (nicht dargestellte) Saugvorrichtung anschließbare Leitung 33 angeordnet.

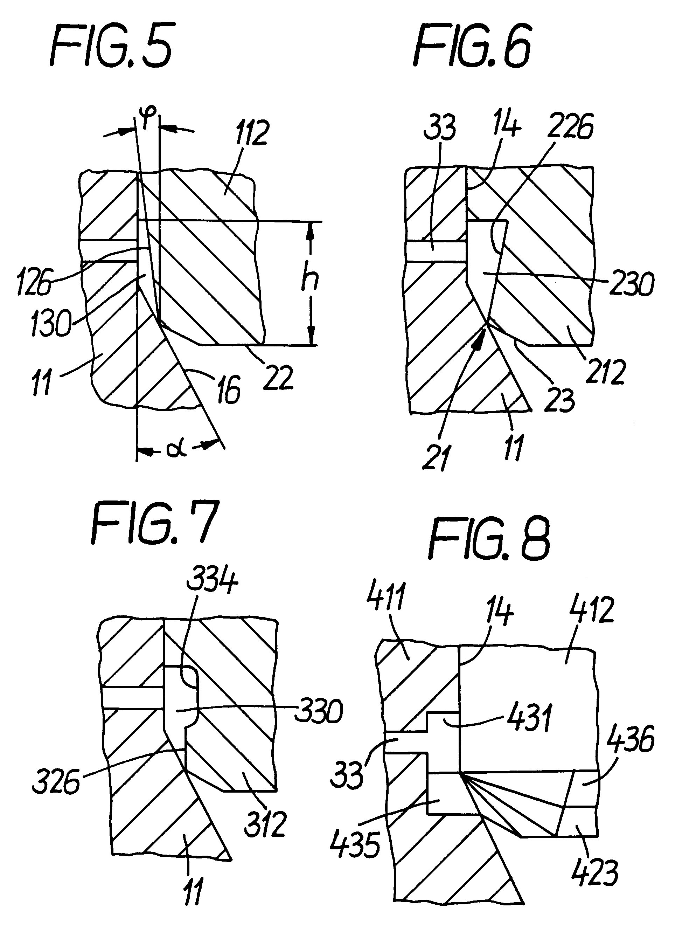

In Abweichung von dem beschriebenen Ausführungsbeispiel sind in den Fig. 5 bis 7 andere Formen der Ausnehmungen 130, 230, 330 in jeweils einem auszugsweisen Querschnitt dargestellt. Bei dem Ausführungsbeispiel gemäß Fig. 5 sind die Seitenflächen 126 unter einem Winkel φ nach außen geneigt, der kleiner ist als der Freiwinkel α , bei dem Ausführungsbeispiel gemäß Fig. 6 sind die Seitenflächen 226 nach innen zurückgezogen und bei dem Ausführungsbeispiel gemäß Fig. 7 weisen die zunächst parallel zur Längsachse 28 verlaufenden Seitenflächen 326 eine Hinterschneidung oder Nut 334 in Umfangsrichtung auf. Die Oberstempel sind für diese Ausführungsbeispiele mit 112, 212, 312 bezeichnet.

Zur Formung eines Grünlings wird der Oberstempel 12, 112, ... über eine zusätzliche (nicht dargestellte) Führung aus der Matrize herausgezogen, der Raum der Matrize über dem Unterstempel 13 mit einer dosierten Masse Sintermaterial beschickt und der Oberstempel 12, 112, ... auf das Sintermaterial gepreßt. Dabei kann der Oberstempel 12, 112, ... mit seiner den Schneidkanten 5 des späteren Schneideinsatzes entsprechenden Begrenzungslinie 21 der Druckfläche 20 bis auf die schrägen Flächenteile 16 der Matrize 11 fahren, ohne daß es zu einem örtlichen Materialstau kommt, da ggf. überschüssiges Sintermaterial in den durch die Ausnehmungen 30, 130, ... gebildeten Freiraum 31 entweichen kann. Um den Freiraum 31 vor dem jeweils nächsten Füll- und Preßvorgang zu säubern, kann dort etwa angesammeltes Sintermaterial durch die Leitungen 33 abgesaugt werden.

Bei dem Ausführungsbeispiel gemäß Fig. 8 ist die Ausnehmung 431 in die Matrize 411 gelegt, wobei hierbei die Begrenzungslinie der unteren Innenfläche 435 der Ausnehmung 431 - abgesehen vom Schrumpfverhältnis - exakt dem Verlauf der Schneidkanten 5 des späteren Schneideinsatzes 1 entspricht. Bei dem Oberstempel 412 schließt sich bei diesem Beispiel an die unter dem Winkel γ gegen die Waagerechte geneigten Flächenstreifen 423 jeweils noch ein unter dem Freiwinkel α gegen die Senkrechte geneigter Flächenstreifen 436 an.

## Patentansprüche

1. Preßwerkzeug, bestehend aus einem Oberstempel (12), einem Unterstempel (13) und einer Matrize (11), zur Herstellung eines zum Sintern eines Schneideinsatzes (1) vorgesehenen Grünlings, wobei der Schneideinsatz (1) unter einem positiven Freiwinkel (α) gegen seine Auflagefläche geneigte Freiflächen und dessen Schneidkanten (5) einen Neigungswinkel (λ) aufweisen,
und wobei die Matrize (11) unter dem Freiwinkel geneigte Seitenflächen aufweist,
**dadurch gekennzeichnet,**
- daß die Druckfläche (20) des Oberstempels (12; 112; 212; 312; 412) entsprechend umgekehrt dem Schrumpfverhältnis des Sintermaterials genau der tatsächlichen Fläche (7, 8) der Oberseite des Schneideinsatzes (1) entspricht und
- daß in der untersten Arbeitsstellung des Oberstempels (12; ...) oberhalb der Begrenzungslinie (21) seiner Druckfläche (20) und an diese angrenzend zwischen dem Oberstempel (12; ...) und der Matrize (11; 411) ein Freiraum (31; 431) vorhanden ist.

2. Preßwerkzeug nach Anspruch 1,
dadurch gekennzeichnet,
daß der Oberstempel (12; ...) in einem Abstand (h) oberhalb seiner Druckfläche (20) im wesentlichen den Querschnitt aufweist, der der Fläche entspricht, die durch die ggf. gerundeten Ecken des Schneideinsatzes (1) und durch diese verbindende gedachte Geraden gebildet ist und
daß der Oberstempel (12; ...) mit seinen den vorgenannten Querschnitt bildenden Flächen (29) in einer entsprechenden Ausnehmung (14) der Matrize (11) geführt ist.

3. Preßwerkzeug nach Anspruch 1 oder 2, dadurch gekennzeichnet, daß die sich an die Begrenzungslinie (21) der Druckfläche (20) anschließenden Seitenflächen (25, 26, 27) des Oberstempels (12; ...) gegenüber einer um den Freiwinkel ( α ) nach außen geneigten gedachten Ebene und ggf. den äußeren Führungsflächen (29) des Oberstempels (12; ...) zurückgenommen sind.

4. Preßwerkzeug nach Anspruch 3, dadurch gekennzeichnet, daß die sich an die Begrenzungslinie (21) der Druckfläche (20) anschließenden Seitenflächen (25, 26, 27) unter einem Winkel ( φ ) nach außen geneigt sind, der nur einen Bruchteil des Freiwinkels ( α ) beträgt.

5. Preßwerkzeug nach Anspruch 4, dadurch gekennzeichnet, daß die sich an die Begrenzungslinie (21) der Druckfläche (20) anschließenden Seitenflächen (25, 26, 27) unter einem Winkel ( φ ) nach außen geneigt sind, der höchstens der Hälfte des Freiwinkels ( α ) entspricht.

6. Preßwerkzeug nach Anspruch 3, dadurch gekennzeichnet, daß die sich an die Begrenzungslinie (21) der Druckfläche (20) anschließenden Seitenflächen (25, 26, 27) des Oberstempels (12; ...) parallel zur Bewegungsrichtung des Oberstempels verlaufen.

7. Preßwerkzeug nach Anspruch 3, dadurch gekennzeichnet, daß die sich an die Begrenzungslinie (21) der Druckfläche (20) anschließenden Seitenflächen (25, 26, 27) des Oberstempels (12; ...) über einen Längenabschnitt (h) in Richtung auf die Mittelachse (28) des Oberstempels (12; ...) zurückgenommen sind.

8. Preßwerkzeug nach einem der Ansprüche 3 bis 7, dadurch gekennzeichnet, daß die Seitenflächen (326) im Abstand zur Druckfläche (20) eine Umfangsnut (334) aufweisen.

9. Preßwerkzeug nach Anspruch 2, dadurch gekennzeichnet,
- daß sich an die den Spanflächenteilen (8) des Schneideinsatzes (1) entsprechenden Flächenteile (423) der Druckfläche (20) des Oberstempels (412) bis zum Erreichen des vollen Führungsquerschnitts des Oberstempels (412) unter dem Freiwinkel ( α ) nach außen geneigte Flächenteile (436) anschließen und
- daß die Matrize (411) eine Umfangsnut (431) aufweist, deren untere Begrenzung (435) der Begrenzungslinie (21) der Druckfläche (20) des Oberstempels (412) in dessen unterster Arbeitsstellung entspricht.

10. Preßwerkzeug nach Anspruch 1, dadurch gekennzeichnet, daß die Matrize (11; 411) im Bereich des Freiraums (31; 431) eine Absaugleitung (3) aufweist.

11. Aus einem von einem Preßwerkzeug nach einem der Ansprüche 1 bis 10 geformten Grünling gesinterter Schneideinsatz mit positivem Freiwinkel und geneigten Schneidkanten, dadurch gekennzeichnet, daß sein der Auflagefläche (2) abgewandter Teil, der durch die seitlichen Freiflächen (3), die Spanflächen (8) und die obere Grundfläche (7) gebildet ist, in seiner endgültigen Form - entsprechend umgekehrt dem Schrumpfverhältnis des Sintermaterials - exakt dem Teil des Hohlraums des Preßwerkzeugs (10) entspricht, der durch die Druckfläche (20) des Oberstempels (12; ...) in seiner untersten Stellung und den seitlichen schrägen Flächen (16) der Matrize (11) gebildet ist.

## Claims

1. A pressing tool comprising an upper punch (12), a lower punch (13) and a die (11), for producing a green compact for sintering a cutting insert (1), the cutting insert (1) having flanks inclined at a positive clearance angle (α) to its bearing surface and its cutting edges (5) having an angle of inclination (λ), the die (11) having lateral surfaces inclined at the clearance angle, characterized in that the pressure surface (20) of the upper punch (12; 112; 212; 312; 412) corresponds, correspondingly conversely to the shrinkage ratio of the sinter material, precisely to the actual surface (7, 8) of the top side of the cutting insert (1); and a free space (31; 431) exists in the bottom operational position of the upper punch (12; ...) above the boundary line (21) of its pressure surface (20) and adjacent thereto between the upper punch (12; ...) and the die (11; 411).

2. A pressing tool according to claim 1, characterized in that the upper punch (12; ...) has at a distance (h) above its pressure surface (20) substantially the cross-section corresponding to the surface which is formed by the possibly rounded corners of the cutting insert (1) and by imaginary straight lines connecting said corners; and the upper punch (12; ...) is guided in a matching recess (14) of the die (11) by its surfaces (29) forming the aforementioned cross-section.

3. A pressing tool according to claims 1 or 2, characterized in that the lateral surfaces (25, 26, 27) of the upper punch (12; ...) adjoining the boundary line (21) of the pressure surface (20) are set back in relation to an imaginary plane outwardly inclined by the clearance angle (α) and possibly in relation to the outer guide surfaces (29) of the upper punch (12; ...).

4. A pressing tool according to claim 3, characterized in that the lateral surfaces (25, 26, 27) adjoining the boundary line (21) of the pressure surface (20) are outwardly inclined at an angle (φ) amounting to only a fraction of the clearance angle (α).

5. A pressing tool according to claim 4, characterized in that the lateral surfaces (25, 26, 27) adjoining the boundary line (21) of the pressure surface (20) are outwardly inclined by an angle (φ) corresponding at most to half the clearance angle (α).

6. A pressing tool according to claim 3, characterized in that the lateral surfaces (25, 26, 27) of the upper punch (12; ...) adjoining the boundary line (21) of the pressure surface (20) extend parallel with the direction of movement of the upper punch.

7. A pressing tool according to claim 3, characterized in that the lateral surfaces (25, 26, 27) of the upper punch (12; ...) adjoining the boundary line (21) of the pressure surface (20) are set back over a longitudinal portion (h) in the direction of the central axis (28) of the upper punch (12; ...).

8. A pressing tool according to one of claims 3 to 7, characterized in that the lateral surfaces (326) are formed with a peripheral groove (334) at a distance from the pressure surface (20).

9. A pressing tool according to claim 2, characterized in that until the full guide cross-section of the upper punch (412) is reached, the surface parts (423) of the pressure surface (20) of the upper punch (412) corresponding to the face parts (8) of the cutting insert (1) are adjoined by surface parts (436) outwardly inclined at the clearance angle (α); and the die (411) is formed with a peripheral groove (431) whose lower boundary (435) corresponds to the boundary line (21) of the pressure surface (20) of the upper punch (412) in its bottom operational position.

10. A pressing tool according to claim 1, characterized in that the die (11; 411) has a suctional removal line (33) in the zone of the free space (31; 431).

11. A cutting insert sintered from a green compact moulded by a pressing tool according to one of claims 1 to 10 and having a positive clearance angle and inclined cutting edges, characterized in that its part remote from the bearing surface (2), which is formed by the lateral flanks (3), the faces (8) and the upper base surface (7), corresponds in its final form, correspondingly conversely to the shrinkage ratio of the sinter material, precisely to that part of the cavity of the pressing tool (10) which is formed by the pressure surface (20) of the upper punch (12; ...) in its lowest position and the lateral inclined surfaces (16) of the die (11).

## Revendications

1. Outil de pressage se composant d'un poinçon supérieur (12), d'un poinçon inférieur (13) et d'une matrice (11), destiné à la fabrication d'un compact vert prévu pour le frittage d'un insert de coupe (1), l'insert de coupe (1) présentant des faces de dépouille inclinées sous un angle positif de dépouille (α) contre sa surface d'appui, et ses arêtes coupantes (5) un angle d'inclinaison (1), et la matrice présentant des faces latérales inclinées sous l'angle de dépouille, caractérisé en ce que la surface de pression (20) du poinçon supérieur (12; 112; 212; 312; 412) correspond exactement à la surface effective (7, 8) de la face supérieure de l'insert de coupe (1), de façon équivalente inversement au rapport de rétraction, et en ce qu'un espace de dégagement (31; 431) se trouve, dans la position de travail la plus basse du poinçon supérieur (12; ...), au-dessus de la ligne de délimitation (21) de sa surface de pression (20) et contre celle-ci, de façon adjacente, entre le le poinçon supérieur (12; ...) et la matrice (11; 411).

2. Outil de pressage selon la revendication 1, caractérisé en ce que le poinçon supérieur (12; ...) présente essentiellement, dans un écartement (h) au-dessus de sa surface de pression (20), la section transversale qui correspond à la surface qui est formée par les arêtes de l'insert de coupe (1) qui peuvent être arrondies et par des droites conçues pour relier ces arêtes et en ce que le poinçon supérieur (12; ...) est guidé, avec ses surfaces (29) formant la section transversale ci-dessus mentionnée, dans un creux (14) correspondant de la matrice (11).

3. Outil de pressage selon les revendications 1 ou 2, caractérisé en ce que les surfaces latérales (25, 26, 27) du poinçon supérieur (12; ...) qui se rattachent à la ligne de délimitation (21) de la surface de pression (20) sont réduites par rapport à un plan conçu avec une inclinaison vers l'extérieur correspondant à l'angle de dépouille (α) et, le cas échéant, par rapport aux surfaces de guidage externes (29) du poinçon supérieur (12; ...).

4. Outil de pressage selon la revendication 3, caractérisé en ce que les surfaces latérales (25, 26, 27) se rattachant à la ligne de délimitation (21) de la surface de pression (20) sont inclinées vers l'extérieur sous un angle (φ) qui ne correspond qu'à une fraction de l'angle de dépouille (α).

5. Outil de pressage selon la revendication 4, caractérisé en ce que les surfaces latérales (25, 26, 27) se rattachant à la ligne de délimitation (21) de la surface de pression (20) sont inclinées vers l'extérieur sous un angle (φ) qui correspond au maximum à la moitié de l'angle de dépouille (α).

6. Outil de pressage selon la revendication 3, caractérisé en ce que les surfaces latérales (25, 26, 27) du poinçon supérieur (12; ...) qui se rattachent à la ligne de délimitation (21) de la surface de pression (20) sont parallèles au sens du mouvement du poinçon supérieur.

7. Outil de pressage selon la revendication 3, caractérisé en ce que les surfaces latérales (25, 26 27) du poinçon supérieur (12; ...) qui se rattachent à la ligne de délimitation (21) de la surface de pression (20) sont réduites au-dessus d'un segment de longueur (h), en direction de de l'axe (28) du poinçon supérieur (12; ...).

8. Outil de pressage selon l'une des revendications 3 à 7, caractérisé en ce que les surfaces latérales (326) présentent une rainure circonférentielle (334) dans l'écartement à la surface de pression (20).

9. Outil de pressage selon la revendication 2, caractérisé en ce que des portions de surface (436) inclinées vers l'extérieur se rattachent aux portions de surface (423) de la surface de pression (20) du poinçon supérieur (412) qui correspondent aux portions de face de coupe (8) de l'insert de coupe (1), jusqu'à l'obtention de la section transversale de guidage totale du poinçon supérieur (412), sous l'angle de dépouille (α) et en ce que la matrice (411) présente une rainure circonférentielle (431) dont la délimitation inférieure (435) correspond à la ligne de délimitation (21) de la surface de pression (20) du poinçon supérieur (412) dans sa position de travail la plus basse.

10. Outil de pressage selon la revendication 1, caractérisé en ce que la matrice (11; 411) présente un tuyau d'aspiration (3) dans la zone de l'espace de dégagement (31; 431).

11. Insert de coupe fritté formé à partir d'un compact vert moulé par un outil de pressage selon l'une des revendications 1 à 10, et présentant un angle positif de dépouille et des arêtes coupantes inclinées, caractérisé en ce que sa partie opposée à la surface d'appui (2) et qui est formée par les faces de dépouille latérales (3), les faces de coupe (8) et la surface supérieure (7) correspond dans sa forme définitive - de façon équivalente, inversement au rapport de rétractation de la matière frittée - exactement à la partie de la cavité de l'outil de pressage (10) qui est formée par la surface de pression (20) du poinçon supérieur (12; ...) dans sa position la plus basse et par les surfaces latérales inclinées (16) de la matrice (11).
